Europäisches Patentamt

European Patent Office

Office européen des brevets

(11) Veröffentlichungsnummer: **0 267 961**
**A1**

## (12) EUROPÄISCHE PATENTANMELDUNG

veröffentlicht nach Art. 158 Abs. 3 EPÜ

(21) Anmeldenummer: 86904985.8

(22) Anmeldetag: 29.05.86

(51) Int. Cl.⁴: **B 01 D 3/22,** B 01 D 47/04

Daten der zugrundeliegenden internationalen Anmeldung:

(86) Internationale Anmeldenummer:
**PCT/SU 86/00050**

(87) Internationale Veröffentlichungsnummer:
**WO 87/07174 (03.12.87 87/27)**

(43) Veröffentlichungstag der Anmeldung: 25.05.88
**Patentblatt 88/21**

(71) Anmelder: **UKRAINSKY NAUCHNO-ISSLEDOVATELSKY INSTITUT PRIRODNYKH GAZOV 'UKRNIIGAZ', Krasnoshkolnaya nab., 20, Kharkov, 310125 (SU)**

(72) Erfinder: **KISELEV, Viktor Mikhailovich, ul. Komandarma Uborevicha, 22-64, Kharkov, 310144 (SU)**

(74) Vertreter: **Finck, Dieter et al, Patentanwälte v. Füner, Ebbinghaus, Finck Mariahilfplatz 2 & 3, D-8000 München 90 (DE)**

(84) Benannte Vertragsstaaten: **DE FR GB IT SE**

(54) **MASSENAUSTAUSCHGERÄT.**

(57) Der Stoffaustauschapparat enthält ein Gehäuse (1), in dem zumindest ein waagerechter dynamischer Boden (6) sowie ein Schaumschichtstabilisator (7) untergebracht sind. Der Schaumschichtstabilisator (7) befindet sich unmittelbar auf dem Boden (6) und in Gestalt eines Gitters aus vertikalen Platten (8) ausgeführt. Die vertikalen Platten (8) bilden Zellen (9), die miteinander in Verbindung stehen. Die an den Boden (6) anschließenden unteren Teile der Platten (8) des Stabilisators (7) sind ungeteilt ausgeführt, während die Zellen (9) des Gitters über im oberen Teil der Platten (8) des Stabilisators (7) vorgesehene Lochungen miteinander in Verbindung stehen.

STOFFAUSTAUSCHAPPARAT

## Technisches Gebiet

Die vorliegende Erfindung bezieht sich auf den chemischen und Erdölmaschinenbau und betrifft insbesondere Stoffaustauschapparate.

## Zugrundeliegender Stand der Technik

Es sind Stoffaustauschapparate für Gas-Flüssigkeit-Kontaktaustausch (Posin M.E. "Schaumgasreiniger, Wärmeaustauscher und Absorber", L., 1959, S. 51) bekannt, die ein Gehäuse enthalten, in dem ein oder mehrere dynamische Böden und ein Beriesler untergebracht sind.

Beim Zuführen einer Berieselungsflüssigkeit bildet sich eine Schicht beweglichen Schaums auf dem Boden, der gasförmige Komponenten oder Staub aus dem Gasstrom absorbiert.

Der Apparat in dieser konstruktiven Ausführung hat jedoch eine verhältnismäßig nicht hohe Leistungsfähigkeit, bedingt durch eine geringe, in der Regel 2 bis 2,3 m/s nicht überstergende Gasströmungsgeschwindigkeit im Vollquerschnitt und eine geringe Schaumschichthöhe auf dem Boden (etwa 100 mm).

Eine Steigerung der Apparatleistung führt zur Entstehung von Wellenderhältmissen auf dem Boden beim Betrieb, was ihrerseits zum Entblößen einzelner Bodenabschnitte und freien Durchtritt nicht behandelter Gasmengen durch dieselben führt, wodurch die Wirksamkeit beim Betrieb des Apparates stark herabgesetzt wird.

Es ist auch ein Stoffaustauschapparat, zur Durchführung von Wärme- und Stoffaustauschprozessen sowie zur Naßreinigung von Gasen bekannt (SU-Urheberschein Nr. 434969, IPK B CI d 47/04), der ein Gehäuse einschließt, in dem dynamische Böden untergebracht sind. Unmittelbar auf jedem Boden befindet sich ein Schaumschichtstabilisator, der als Zellengitter aus vertikalen Platten von einer 0,2 bis 0,6 Schaumschichthöhe mit einer freien Querschnittsfläche von nicht weniger als 0,8 des Apparatquerschnitts ausgeführt ist. In manchen

Platten des Schaumstabilisators sind in der Nähe der Bodenebene Öffnungen vorgesehen.

Die Hauptbestimmung des Schaumschichtstabilisators, der sich unmittelbar in der Schaumschicht auf dem Boden befindet, besteht in der Schaffung auf diesem einer hohen Kleinzellenschaumschicht gleichförmiger Struktur mit hochentwickelter und stets erneuerter Phasenkontaktfläche ohne sichtbare Schwingungen, d.h. also in der Vermeidung der Entstehung von Wellenverhältnissen beim Betrieb, wodurch die Arbeitsleistung des Apparates erhöht werden kann.

Die Wirksamkeit der Wärme- und Stoffaustauschprozesse in derartigen Apparaten ist jedoch bei linearen Gasströmungsgeschwindigkeiten von über 2,6 bis 3,0 m/s (für das Luft-Wasser-System unter atmosphärischen Bedingungen) nicht hinreichend hoch. In der oberen Schicht bildet sich eine pulsierende Strahlzone mit Flüssigkeitsauswürfen entlang der Achse der Stabilisatorzellen, was zur Folge hat, daß die gesamte Schaumschichtdicke für einen aktiven Wärme- und Stoffaustausch sowie für die Staubabscheidung in vollem Maße nicht ausgenutzt werden kann, wobei dazu noch eine Spritzerbildung vorkommt, durch die die Apparatleistung und die Wirksamkeit der Wärme- und Stoffaustauschprozesse herabgesetzt wird.

Die im unteren Teil einzelner Schaumstabilisatorplatten vorhandenen Öffnungen können eine garantiert gleichmäßige Flüssigkeitsverteilung über die gesamte Bodenebene nicht gewährleisten.

Offenbarung der Erfindung

Der Erfindung liegt die Aufgabe zugrunde, einen Stoffaustauschapparat mit einer solchen konstruktiven Ausführung des Schaumschichtstabilisators zu schaffen, durch die die Arbeitsleistung und der Wirkungsgrad des Apparates gesteigert eine gleichmäßige Flüssigkeitsverteilung über die gesamte Bodenebene in Form eines Kleinzellenschaums unter Vermeidung der Spritzerbildung und der Flüssigkeitsauswürfe entlang der Achse der

OO267961

- 3 -

Schaumstabilisatorzellen bei erhöhter Gasströmungs-
geschwindigkeit gewährleistet werden.

Das Wesen der Erfindung besteht darin, daß in
einem Stoffaustauschapparat, der ein Gehäuse enthält,
in dem zumindest ein waagerechter dynamischer Boden
sowie ein Schaumschichtstabilisator untergebracht sind,
der sich unmittelbar auf dem Boden befindet und in Gestalt
eines Gitters aus Zellen bildenden vertikalen Platten
ausgeführt ist, wobei die Zellen miteinander verbun-
den sind, erfindungsgemäß die an den Boden anschließenden unteren Teile der Stabilisatorplatten ungeteilt ausgeführt sind während die Gitterzellen über im oberen Teil
der Stabilisatorplatten vorgesehene Lochungen miteinan-
der in Verbindung stehen.

Dadurch kann eine Selbstregelung der Flüssigkeits-
verteilung auf dem Boden dank dem Überströmen des Schaums
aus der einen Zelle in die andere über die Lochungen in
den Stabilisatorplatten gewährleistet werden wobei die
ungeteilt ausgeführten Abschnitte des Stabilisators die
unerwünschte Flüssigkeitsüberströmung entlang der Bodenebene zu den niederen und verzogenen Stellen im Boden
hin verhindern, sodaß eine gleichmäßige Flüssigkeits-
verteilung über den gesamten Bodenquerschnitt mit einer
relativ großen Fläche gesichert wird.

Es empfiehlt sich dabei, daß die Höhe des unteren
ungeteilt ausgeführten Teiles der Stabilisatorplatten 0,1
bis 0,5 der Stabilisatorplattenhöhe beträgt.

Dank der ungeteilten Ausführung des unteren Teils
der Stabilisatorplatten mit einer 0,1 bis 0,5 seiner
gesamten Höhe gleichen Höhe wird die unerwünschte Flüs-
sigkeitsstauung an den niederen Stellen bzw.in der Nähe
der verzogenen Stellen der Bodenbahn verhindert und
eine gleichmäßige Verteilung der Schaumschicht über die
gesamte Bodenebene gewährleistet.

Es ist zweckmäßig, daß der Lochungsfaktor des
Stabilisators den Freiquerschnittsfaktor des Bodens um

BAD ORIGINAL

ein 1,2 bis 3 faches übertrifft.

Durch diese Ausführung wird eine zuverlässige Selbstregelung der Schaumschicht bei Überströmungen aus der einen Zelle in die andere gewährleistet.

Es ist auch zweckmäßig daß beim Vorhandensein von zwei und mehr Böden die Stabilisatorhöhe 0,6 bis 1,0 des Abstandes zwischen den Böden beträgt.

Der hohe Stabilisator gewährleistet einen effektiven Betrieb des Stoffaustauschapparates in einem weiten Meßbereich der Gasströmungsgeschwindigkeiten.

In Apparaten geringen Durchmessers kann der Stabilisator den gesamten Abstand zwischen den Böden überdecken. In Apparaten großen Durchmessers sollte die Stabilisatorhöhe etwas kleiner als der Abstand zwischen den Böden sein, um eine ungehindete Gasverteilung (Dampfverteilung) vor dem Eintritt auf den höher liegender Boden erzielen zu können.

Es ist ferner zweckmäßig, daß in "jeder Stabilisatorzelle zumindest zwei diagonal verlaufende Trennwände kreuzweise angebracht sind die übereinander liegen, wobei die Höhe jeder dieser Trennwände zumindest der halben Länge der Zellenseite gleich ist.

Durch die Anordnung solcher Trennwände in jeder Zelle wird die Spritzerbildung am Zellen mittelpunkt verhindert. Die Flüssigkeit prallt gegen die Platte und zerfließt über diese, wobei sie zu den Zellenwände hin zurückgeworfen wird. Dieser Prozeß wiederholt sich an der höher liegenden kreuzweise angebrachten Trennwand, wodurch der Spritzerlöschungseffekt verstärkt wird. Dadurch kann, eine guter Schaumstabilisierungseffekt bei vergrößerten Zellendimensionen erzielt werden.

Zweckmäßigerweise wird ferner in jeder Stabilisatorzelle zumindest eine kreuzförmige Trennwand angebracht, deren Höhe zumindest der halben Länge der Zellenseite gleich ist.

Die kreuzförmige Trennwand bewirkt eine wirksamere Löschung der Spritzerbildung in jeder Zelle und ges-

- 5 -

tattet es, Zellen einer größeren Dimension im Vergleich zu den diagonal verlaufenden Trennwänden zu verwenden oder bei derselben Zellendimension die Gasströmungsgeschwindigkeit (Dampfströmungsgeschwindigkeit ) zu erhöhen, d.h. die Arbeitsleistung des Stoffaustauschapparates zu steigern.

Dabei empfiehlt es sich, die Trennwände in den Zellen gelocht auszuführen.

Die gelochten Trennwände bewirken eine bessere Löschung der Spritzerbildung im Vergleich zu den ungeteilt ausgeführten Trennwänden und halten die Schaumschicht in der Zelle zuverlässiger zurück, und dies gestattet es die Gasströmungsgeschwindigkeit (Dampfströmungsgeschwindigkeit) im Apparat zu erhöhen.

Kurze Beschreibung der Zeichnungen

Im folgenden wird die Erfindung in einer eingehenden Beschreibung konkreter Ausführungsbeispiele derselben unter Bezugnahme auf die beiliegenden Zeichnungen näher erläutert, in denen es zeigt:

Fig. 1 - einen erfindungsgemäßen Stoffaustauschapparat im Langsschnitt;

Fig. 2 - einen Schaumschichtstabilisator in der Axonometrie;

Fig. 3 - eine Stabilisatorzelle im Langsschnitt mit einer darin angebrachten kreuzförmigen Trennwand im Oberteil und Zwei diagonal verlaufenden Trennwänden dar unter

Fig. 4 - einen Schnitt nach einer Linie IY-IY der Fig. 3;

Fig. 5 - eine kreuzförmige Trennwand mit einer Diagonalanordnung ihrer Platten in der Zelle, Ansicht in der axonometrischen Darstellung;

Fig. 6 - zwei diagonal verlaufende Trennwände, die in einem Abstand voneinander liegen, Ansicht in der axonometrischen Darstellung.

Beste Ausführungsform der Erfindung

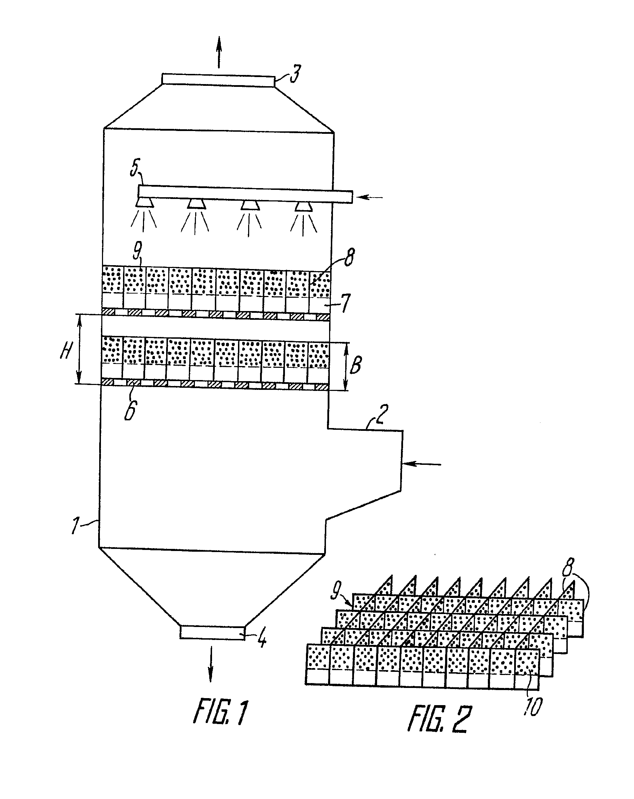

Der in Fig. 1 dargestellte Stoffaustauschapparat

- 6 -

hat ein Gehäuse 1 rechteckigen oder, runden Querschnitts, der mit Ansatzstücken 2 und 3 für Gasein- und -austritt und einem Stutzen 4 für die Ableitung der verbrauchten Flüssigkeit versehen ist. Im Inneren des Gehäuses befindet sich eine Berieselungsvorrichtung 5. Ein dynamischer Boden 6 ist im Inneren des Gehäuses 1 horizontal angebracht und dient zum Ausbilden und Unterstützen der Schaumschicht. Der Boden 6 kann entweder aus gelochten Blechen oder aber aus einzelnen Rohren (Stäben bestehen, die ein regelmäßiges Gitter bilden. Unmittelbar auf dem Boden 6 befindet sich ein Schaumschichtstabilisator 7, der in Gestalt eines Gitters aus vertikal angebrachten Platten 8 ausgeführt ist, die Zellen 9 bilden.

Die Abmessung C einer Seite der quadratförmigen Zelle 9 beträgt 0,08 bis 0,25 ihrer Höhe B.

In Fig. 1 ist eine Ausführungsform des Apparates mit zwei Böden dargestellt, aber der erfindungsgemäße Stoffaustauschapparat kann einen oder mehrere Böden enthalten. Bei zwei und mehr Böden beträgt die Höhe B des Stabilisators 7 0,6 bis 1,0 des Abstandes H zwischen den Böden.

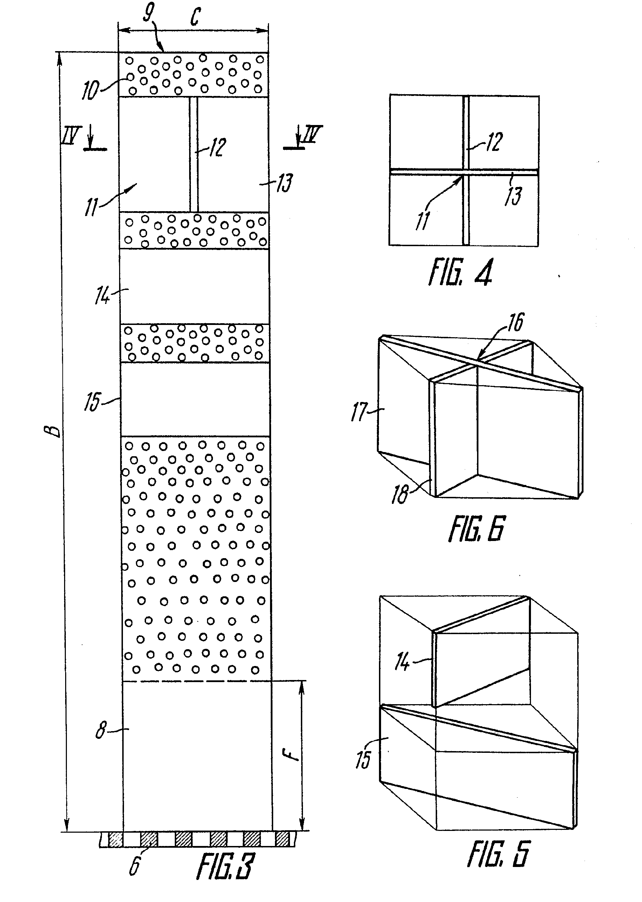

In Fig. 2 ist der Schaumschichtstabilisator 7 in der Axonometrie dargestellt.

Die Zellen 9 stehen über im oberen Teil der Statten 8 ausgeführte Lochungen 10 miteinander in Verbindung. Der untere Teil dieser Platten 8 (Fig. 3) ist ungeterlt ausgeführt, so daß die Höhe F des unteren, ungeterlt ausgeführten Teiles der Platten 8 des Stabilisators 7 0,1 bis 0,5 der Höhe B der Stabilisatorplatten beträgt.

In Fig. 3 ist die Zelle 9 des Stabilisators 7 im Längsschnitt dargestellt. Die Platte 8 ist in ihrem unteren, an den Boden 6 anschließenden Teil ungeteilt ausgeführt aber weiter bis nach oben mit Lochungen 10 versehen. Die Anzahl dieser Lochungen und ihre Abmessungen werden so gewählt, daß der Lochungsfaktor des Stabilisators den Freiquerschnittsfaktor des Bodens um ein 1,2 bis 3, Ofaches übertrifft.

00267961

Im oberen Teil der Zelle 9 ist eine kreuzförmige Trennwand 11 befestigt, die von Platten 12 und 13 gebildet ist, die zu den Platten 8 des Stabilisators 7 parallel liegen.

Werter unten sind diagonal verlaufende Trennwände 14 und 15 befestigt, die in einem Abstand voneinander liegen.

In Fig. 4 ist eine Ausführungsform der krezuförmigen Trennwand 11 dargestellt, bei der die Platten 12 und 13 parallel zu den Platten 8 (Fig. 1) des Stabilisators 7 befestigt sind.

In Fig. 5 ist die Anordnung der Trennwände 14 und 15 an einer Diagonale entlang in der Zelle 9 des Stabilisators 7 dargestellt, wobei der Umriß der Zelle 9 durch dünne Linien angedeutet ist. In der abgebildeten Ausführungsform der Trennwand berühren die Trennwände nicht einander, doch können sie auch einander berühren.

In Fig. 6 ist eine Ausführungsform einer krezuförmigen Trennwand 16 mit einer Diagonalanordnung von Platten 17 und 18 in der Zelle 9 des Stabilisators 7 (Fig. 1) dargestellt, wobei der Umriß der Zelle 9 durch dünne Linien angedeutet ist.

Die Anordnungsvarianten der krezuförmigen Trennwand parallel zu den Stabilisatorplatten (Fig. 4) oder entlang der Zellendiagonale (Fig. 5)- sind vom Standpunkt der Funktion nahezu gleichwertig, der Vorzug dieser oder jener Variante wird ausgehend von technologischen Erwägungen bei der Stabilisatorfertigung gegeben.

In Fig. 3, 4, 5 und 6 ist eine Ausführungsform der Trennwände aus ungeteilt ausgeführten Platten dargestellt, aber es können sämtliche Trennwände auch gelocht ausgeführt sein. Eine solche Ausführung hat den Vorteil, daß nicht nur die Masse der Trennwände verringert wird, sondern auch dadurch den gelochten Trennwänden wertvollere funktionale Eigenschaften verliehen werden, d.h. sie bewirken eine bessere Löschung der Spritzerbildung in den Stabilisatorzellen, wodurch ein wirksamer Betrieb

- 8 -

des Stoffaustauschapparates bei maximal zulässiger Gasströmungsgeschwindigkeit (Dampfströmungsgeschwindigkeit) gesichert wird.

Der Stoffaustauschapparat wird wie folgt betrieben.

Ein Gas (Dampf) wird über das Ansatzstück 2 zugeführt, und durchströmt den dynamischen Boden 6 auf dem sich eine über die Berieselungsvorrichtung 5 zugeführte Flüssigkeit befindet.

Beim Gasdurchtritt durch den flüssigkeitsberieselten Boden 6 entsteht auf diesem eine Kleinzellenschaumschicht, in der die Wärme- und Stoffaustauschprozesse sowie die Reinigung des Gases vom Staub besonders intensiv ablaufen. Das gereinigte Gas wird aus dem Apparat über den Stutzen 3 abgeleitet, die Flüssigkeit fließt über den Stutzen 4 aus.

Bei einer ungleichmäßigen Flüssigkeitszufuhr auf den Boden 6 findet ein Ausgleich ihrer Verteilung auf der Ebene des Bodens 6 aufkosten eines Überströmens in die Nachbarsektionen des Stabilisators 7 statt.

Bei einer großen Bodenfläche empfiehlt es sich, einen freien Raum über dem Stabilisator für eine gleichmäßige Gaszufuhr zu dem höherliegenden Boden vorzusehen. Bei einem kleinen Stoffaustauschapparat kann der Stabilisator den gesamten Abstand zwischen den Böden ausfüllen.

Die diagonal verlaufende oder krezuförmigen Trennwände in den Stabilisatorzellen tragen dazu bei, daß die stabilisierende Wirkung des Stabilisators auf die Schaumschicht dank dem Dämpfen der am Zellenmittelpunkt entstehenden pulsierenden Schwingungen des Schaums und dem Unterdrücken der dabei erfolgenden Spritzerbildung verbessert wird Besonders wirkungsvoll dämpfen die Pulsationen und unterdrücken die Sprotzerbildung die aus gelochten Platten hergestellten Trennwände da die besser als die ungeteilt ausgeführten Trennwände die Schaumschicht innerhalb jeder Stabilisatorzelle zurückhalten

und umverteilen. Die Stabilisatorzellen mit den gelochten diagonal verlaufenden oder kreuzförmigen Trennwänden lassen die höchsten im Vergleich zu den anderen Ausführungsformen des Stabilisators Gasströmungsgeschwindigkeiten Dampfströmungsgeschwindigkeiten im Stoffaustauschapparat zu.

Der Stoffaustauschapparat in der erfindungsgemäßen Ausführung gestattet es, die Leistungsfähigkeit von Absorptions-, Rektifikations- und Desorptionsanlagen sowie vom Gasentstaubungseinheiten die mit dem erfindungsgemäßen Stoffaustauschapparat ausgestattet sind, um ein 1,5 bis 2 faches zu steigern.

Darüberhinaus gewährleistet der erfindungsgemäße Stoffaustauschapparat die Gewinnung von Stoffen mit einem höheren Reinkeitsgrad dank einer hohen Effektivität des Wärme- und Stoffaustausches zwischen den zu trennenden Strömen.

## Industrielle Anwendbarkeit

Die vorliegende Erfindung gestattet es, die Leistungsfähigkeit des Hauptapparates einer Stoffaustauschanlage-einer Stoffaustauschsäule - zu erhöhen, und auf diesem Wege Minianlagen einer hohen Einheitsleistung zu schaffen. Die Erfindung kann in Stoffaustauschsäulen der chemischen, erdölchemischen, Nahrungsmittel-, Erdöl- und Gasindustrie verwendet werden.

Die verzuziehenden Einsatzgebiete der Erfindung sind Entäthanisierungs- und Stabilisierungsanlagen für Gaskondensat Hochdruckabsorber in technologischen Linien der Gasverarbeitungswerke, Rektifikationsanlagen in der Synthesekautschukherstellung, Kryogenrektifikationsanlagen zur Luftzerlegung Apparate für Naßreinigung der Gase vom Staub.

PATENTANSPRÜCHE

1. Stoffaustauschapparat , der ein Gehäuse (1) enthält, in dem zumindest eine waagerechter dynamischer Boden (6) sowie ein Schaumschichtstabilisator (7) untergebracht sind, der sich unmittelbar auf dem Boden (6) befindet und in Gestalt eines Gitters aus Zellen (9) bildenden vertikalen Platten (8) ausgeführt ist, wobei die Zellen (9) miteinander verbunden sind, d a d u r c h g e k e n n z e i c h n e t , daß die an den Boden (6) anschließenden unteren Teile der Platten (8) des Stabilisators (7) ungeteilt ausgeführt sind, während die Gitterzellen (9) über im oberen Teil der Platten des Stabilisators (7) vorgesehene Lochungen (10) miteinander in Verbindung stehen.

2. Stoffaustauschapparat nach Anspruch 1, d a d u r c h g e k e n n z e i c h n e t , daß die Höhe des unteren ungeteilt ausgeführten Teiles der Platten (8) des Stabilisators (7) 0,1 bis 0,5 der Höhe der Platten (8) des Stabilsators (7) beträgt.

3. Stoffaustauschapparat nach Ansprüchen 1 oder 2, d a d u r c h g e k e n n z e i c h n e t , daß der Lochungsfaktor des Stabilisators (7) den Freiquerschnittsfaktor des Bodens (6) um ein 1,2 bis 3,0faches übertrifft.

4. Stoffaustauschapparat nach einem beliebigen der Ansprüche 1 bis 3, d a d u r c h g e k e n n z e i c h n e t , daß beim Vorhandensein von zwei und mehr Böden die Höhe B des Stabilisators (7) 0,6 bis 1,0 des Abstandes H zwischen den Böden beträgt.

5. Stoffaustauschapparat nach einem beliebigen der Ansprüche 1 bis 4, d a d u r c h g e k e n n z e i c h n e t , daß in jeder Zelle (9) des Stabilisators (7) zumindest zwei diagonal verlaufend Trennwände (14, 15) kreuzweise angebracht sind die übereinander liegen, wobei die Höhe jeder dieser Trennwände (13, 14) zumindest der halben Länge der Seite der

00267961

- 11 -

Zelle (9) gleich ist.

6. Stoffaustauschapparat nach einem beliebigen der Ansprüche 1 bis 4, d a d u r c h  g e k e n n - z e i c h n e t , daß in jeder Zelle (9) des Stabili- sators zumindest eine kreuzförmige Trennwand (11) angebracht ist, deren Höhe zumindest der halben Länge der Seite der Zelle (9) gleich ist.

7. Stoffaustauschapparat nach Ansprüchen 5 oder 6, d a d u r c h  g e k e n n z e i c h n e t , daß die Trennwände (12, 13) in den Zellen (9) gelocht ausge- führt sind.

00

FIG. 1

FIG. 2

EPAC-36001.0

00267961

FIG. 3

FIG. 4

FIG. 6

FIG. 5

## I. CLASSIFICATION OF SUBJECT MATTER (if several classification symbols apply, indicate all)

According to International Patent Classification (IPC) or to both National Classification and IPC

IPC$^4$: B 01 D 3/22, 47/04

## II. FIELDS SEARCHED

### Minimum Documentation Searched [7]

| Classification System | Classification Symbols |
|---|---|
| IPC$^4$: | B 01 D 3/22, 3/16, 47/04 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 578091, (Leningradsky ordena Trudovogo Krasnogo Znameni tekhnologichesky institut imeni Lensoveta, et al.) 24 October 1977 | 1,2 |
| A | SU, A1, 590002, (Nauchno-issledovatelsky otdel Leningradskogo gosudarstvennogo nauchno-issledovatelskogo i proektnogo instituta osnovnoi khimicheskoi promyshlennosti) 01 February 1978 | 1,3,6 |
| A | SU, A1, 691164, (Leningradsky gosudarstvenny nauchno-issledovatelsky i proektny institut osnovnoi khimicheskoi promyshlennosti, et al.) 15 October 1979 | 1,3,4 |
| A | SU, A1, 965483, (Nauchno-issledovatelsky i proektny institut po gazoochistnym sooruzheniyam, tekhnike bezopasnosti i okhrane truda v promyshlennosti stroitelnykh materialov) 15 October 1982, see the drawings ../.. | 1,7 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 October 1986 (27.10.87) | 26 February 1987 (26.02.87) |
| International Searching Authority | Signature of Authorized Officer |
| ISA/SU | |

| FURTHER INFORMATION CONTINUED FROM THE SECOND SHEET | | |
|---|---|---|
| A | JP, B2, 58-37002, (MITSUBISHI YUSHI K.K.) 13 August 1983, see the drawings | 1,6 |

## V. ☐ OBSERVATIONS WHERE CERTAIN CLAIMS WERE FOUND UNSEARCHABLE [1]

This international search report has not been established in respect of certain claims under Article 17(2) (a) for the following reasons:

1. ☐ Claim numbers............, because they relate to subject matter not required to be searched by this Authority, namely:

2. ☐ Claim numbers............, because they relate to parts of the international application that do not comply with the prescribed requirements to such an extent that no meaningful international search can be carried out, specifically:

3. ☐ Claim numbers..........., because they are dependent claims and are not drafted in accordance with the second and third sentences of PCT Rule 6.4(a).

## VI. ☐ OBSERVATIONS WHERE UNITY OF INVENTION IS LACKING [2]

This International Searching Authority found multiple inventions in this international application as follows:

1. ☐ As all required additional search fees were timely paid by the applicant, this international search report covers all searchable claims of the international application.

2. ☐ As only some of the required additional search fees were timely paid by the applicant, this international search report covers only those claims of the international application for which fees were paid, specifically claims:

3. ☐ No required additional search fees were timely paid by the applicant. Consequently, this international search report is restricted to the invention first mentioned in the claims; it is covered by claim numbers:

4. ☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)